# EUROPÄISCHE PATENTSCHRIFT

(11) **EP 2 715 293 B1**
(45) Veröffentlichungstag und Bekanntmachung des Hinweises auf die Patenterteilung: **26.02.2020**
(21) Anmeldenummer: 12728964.3
(22) Anmeldetag: 24.05.2012
(51) Int. Cl.: G01F 1/684, G01F 5/00, G01F 25/00

(54) **MESSVORRICHTUNG MIT THERMISCHEM SENSOR ZUR MESSUNG DES DURCHFLUSSES EINES FLUIDS**
MEASURING DEVICE WITH THERMAL SENSOR FOR MEASURING A FLUID FLOW RATE
DISPOSITIF DE MESURE AVEC CAPTEUR THERMIQUE POUR MESURER LE DÉBIT D'UN FLUIDE

(30) Priorität: 01.06.2011 DE 102011103175
(43) Veröffentlichungstag der Anmeldung: 09.04.2014
(73) Patentinhaber: Sensus Spectrum LLC, Raleigh, NC 27615 (US)
(72) Erfinder: SCHÄFER, Burghardt, 67112 Mutterstadt (DE); CHU ANH, Tuan, 67071 Ludwigshafen (DE)
(74) Vertreter: Patentanwälte Dr. Keller, Schwertfeger Partnerschaft mbB
(86) Internationale Anmeldenummer: PCT/EP2012/002220
(87) Internationale Veröffentlichungsnummer: WO 2012/163500

(56) Entgegenhaltungen:
- DE-A1- 4 340 882
- DE-A1- 10 009 154
- DE-A1- 19 522 648
- JP-A- H11 281 448
- US-A- 4 413 514
- US-A- 4 480 467
- US-A1- 2008 072 979
- US-A1- 2010 251 815

## Beschreibung

### Technisches Gebiet:

Die vorliegende Erfindung betrifft eine Messvorrichtung nach dem Oberbegriff des Anspruchs 1.

### Stand der Technik:

Zur Messung von Strömungsgeschwindigkeiten bzw. Durchflüssen eines durch ein Messrohr hindurchströmenden Fluids werden bevorzugt Anemometer verwendet. Anemometer wie z.B. thermische Anemometer oder Hitzdrahtanemometer haben bei kleinen Strömungsgeschwindigkeiten an der Messstelle eine große, d.h. gute Messauflösung und damit hohe Messgenauigkeit. Mit zunehmender Strömungsgeschwindigkeit werden die Messauflösung und damit die Messgenauigkeit dieses thermischen Anemometers jedoch schlechter.

Die US 4 480 467 A beschreibt ein Durchflussüberwachungsgerät mit einem Gehäuse, in dem ein Durchgang für eine Flüssigkeit vorgesehen ist. In dem Gehäuse sind zwei Abschnitte mit einem größeren Durchmesser vorgesehen. In einem dieser Abschnitte ist ein Temperaturfühler angeordnet und in einem anderen Abschnitt sind sowohl ein Temperaturfühler als auch ein Heizelement vorgesehen. Die Temperaturfühler und das Heizelement sind jeweils in einer Hülse eingebettet, wobei die Hülse in den Durchgang hineinragt.

In der US 2010/251 815 A1 ist ein thermischer Durchflusssensor mit Turbulenzerzeugern offenbart. Der Messsensor ist in einem Durchflussbereich zwischen zwei Öffnungen angeordnet. Der Durchflussbereich weist einen größeren Durchmesser auf als der Eingangs- bzw. Ausgangsbereich. Der Messsensor ist mittig im Messrohr angeordnet.

In der DE 195 22 648 A1 wird ein thermisches Strömungsmessgerät mit geringer Turbulenz in der Fluidströmung beschrieben. Ein Fluid strömt durch eine Bypasspassage einer Sensoreinheit. Die Bypasspassage, die in einem zentralen Element vorgesehen ist, hat an der stromaufwärtigen Seite eine Passage bzw. einen Durchgang mit größerem Durchmesser, an der stromabwärtigen Seite einen Durchgang mit kleinerem Durchmesser und einen Stufenabschnitt dazwischen. Ein Strömungserfassungsabschnitt umfasst einen Strömungsmesswiderstand und einen Temperaturausgleichswiderstand, die in der schmalen Passage angeordnet sind.

Die US 2008/0072979 A1 betrifft einen Rohradapter, um den Fluss nach einem Sensor anzupassen. Dabei dient der Adapter, der aus einer oder mehreren Hülsen besteht, dazu, innerhalb eines Rohres den Durchmesser des Rohres zu beschränken, um eine Erhöhung der Fließgeschwindigkeit durch den Bereich des Rohres, in dem der Adapter angeordnet ist, zu erhöhen.

Die DE 100 09 154 A1 offenbart eine Vorrichtung zur Messung von zumindest einem Parameter eines strömenden Mediums. Die Vorrichtungen umfasst ein Messelement, das in einer Leitung angeordnet und von dem Medium umströmt wird. In der Leitung sind Verengungen vorhanden, die sich radial in die Leitung erstrecken.

Die DE 43 40 882 A1 beschreibt eine Vorrichtung zur Messung der Masse eines strömenden Mediums, die nahezu unabhängig von einer schwankenden Strömung ein gleichbleibend präzises Messergebnis erzielt. Stromaufwärts des Messelements sind Mittel in den Messkanal eingebracht, die im Bereich der Innenwandung des Messkanals angeströmte Reibflächen aufweisen.

Aus der US 4 413 514 A ist eine Messvorrichtung mit einem Messrohr, in dem ein thermischer Sensor vorgesehen ist, bekannt. Der Innendurchmesser des Messrohres nimmt stetig von einem Einlassabschnitt zu einem Scheitel zu und von dem Scheitel zu einem Auslassabschnitt ab. Der thermische Sensor ist im Bereich des Messrohrs angeordnet, in dem der Durchmesser von dem Scheitel zu einem Auslassabschnitt abnimmt.

Die JP H11 281 448 A offenbart eine Messvorrichtung, umfassend ein Messrohr mit einem Verbindungsabschnitt und einem vergrößerten Abschnitt. Im Innenraum des vergrößerten Abschnitts ist ein Sensor zur Messung des Durchflusses eines Fluids angeordnet. Die beiden Sensoren sind in dem Fluid angeordnet.

Thermische Anemometer finden beispielsweise Einsatz in Wasserzählern. Bei Wasserzählern muss jedoch mit großen Durchflussbereichen, d.h. großen Strömungsgeschwindigkeitsbereichen gerechnet werden, was dazu führt, dass die Messgenauigkeit des Anemometers abnimmt, je größer der Durchflussmessbereich bzw. Strömungsgeschwindigkeitsbereich ist.

Insbesondere für den Einsatz in Wasserzählern ist es somit wünschenswert, dass ein Sensor wie ein Anemometer in einem großen Strömungsgeschwindigkeitsbereich, insbesondere bei großen Strömungsgeschwindigkeiten, eines Fluids einen Messwert mit einer hohen Genauigkeit liefert.

Da die Einbaulänge häufig in einem gegebenen System, wie etwa einer Frischwasserzuführung in einer Wohnanlage, in das die Messvorrichtung eingebaut werden soll, vorgegeben ist, sollte die Messvorrichtung die vorgegebenen Einbaumaße nicht überschreiten.

### Darstellung der Erfindung:

Es ist somit Aufgabe der vorliegenden Erfindung, eine Messvorrichtung umfassend ein Messrohr und einen thermischen Sensor zur Messung des Durchflusses eines durch das Messrohr hindurchströmenden Fluids bereitzustellen, die die Strömungsgeschwindigkeit eines durch das Messrohr hindurchströmenden Fluids in einem großen Strömungsgeschwindigkeitsbereich, insbesondere auch bei hohen Strömungsgeschwindigkeiten, präzise bestimmt. Darüber hinaus ist es eine weitere Aufgabe der vorliegenden Erfindung, eine derartige Messvorrichtung bereitzustellen, die eine gegebene Einbaulänge nicht überschreitet.

Erfindungsgemäß wird diese Aufgabe durch eine Messvorrichtung nach Anspruch 1 gelöst.

Im Rahmen der vorliegenden Erfindung wird unter Durchmesser sowohl der Durchmesser eines runden Rohres als auch der hydraulische Durchmesser eines nicht runden Rohres verstanden.

Der Erfindung liegt die Kenntnis zugrunde, dass die Strömungsgeschwindigkeit in einem Rohrabschnitt verringert werden kann, indem die Querschnittsfläche des Rohrabschnitts vergrößert wird.

Da der Sensor im Bereich des Messabschnitts angeordnet ist und der Messabschnitt einen größeren Durchmesser als der Einlass des Messrohres aufweist, ist die Strömungs-geschwindigkeit eines durch die Messvorrichtung strömenden Fluids im Bereich des Messabschnitts reduziert, so dass die Strömungsgeschwindigkeit des Fluids im Bereich des Messabschnitts mit einer höheren Genauigkeit erfasst werden kann als am Einlass des Messrohres, weil der Durchmesser dort kleiner ist. Der von dem Sensor erfasste Wert der Strömungsgeschwindigkeit des Fluids kann so umgerechnet werden, dass der Durchfluss im Messrohr mit hoher Genauigkeit angegeben werden kann. Eine baulich bedingte Einbaulänge für eine Messvorrichtung wird mittels der erfindungsgemäßen Messvorrichtung eingehalten.

Die erfindungsgemäße Vorrichtung hat den Vorteil, dass bei einer gegebenen Einbaulänge einer Messvorrichtung und einem gegebenen Durchmesserverhältnis zwischen Innenrohrmessabschnitt zu Innenrohreinlass die Vergrößerung des Querschnitts unter einem geringeren Winkel erfolgt als in dem Fall, in dem das Messrohr im Bereich des Messabschnitts um dieses Querschnittsverhältnis erhöht werden würde. Der geringere Winkel führt dazu, dass sich weniger Rückströmungen im Strömungsprofil ausbilden, die das Messergebnis verfälschen könnten, und somit auch bei vergleichsweise hohen Strömungsgeschwindigkeiten des Fluids die Strömungsgeschwindigkeit des Fluids exakt gemessen werden kann.

Zur Vermeidung von Rückströmung und Wirbel ist es von Vorteil, dass sich der Innendurchmesser des Innenrohrs vom Innenrohreinlass zum Innenrohrmessabschnitt stetig erweitert und vom Innenrohrmessabschnitt zum Innenrohrauslass stetig verjüngt.

Eine zusätzliche Verbesserung bezüglich der Vermeidung von Rückströmung und Wirbeln kann dadurch erzielt werden, dass bei einer bevorzugten Ausführungsform der Winkel β, unter dem sich das Innenrohr bezüglich der Achse des Innenmessrohrs vom Innenrohreinlass zum Innenrohrmessabschnitt stetig erweitert und vom Innenrohrmessabschnitt zum Innenrohrauslass stetig verjüngt, möglichst klein, vorzugsweise kleiner 30°, ist.

Um einen möglichst großen Messbereich abzudecken, ist es von Vorteil, dass das Innendurchmesserverhältnis des Innenrohrmessabschnitts zu Innenrohreinlass in einem Bereich von etwa 1,5 bis 6 liegt.

Für den Einsatz der Messvorrichtung als Wasserzähler ist es von Vorteil, dass eine Justagevorrichtung vorgesehen ist.

Aus messtechnischen Gründen ist es vorteilhaft, dass das Messrohr und/oder das Innenrohr einen rechteckigen oder elliptischen Querschnitt aufweisen/aufweist.

### Kurze Beschreibung der Zeichnungen:

Bevorzugte Ausführungsformen der Erfindung werden anhand der beigefügten Zeichnungen näher beschrieben, in denen zeigen:
Fig. 1 eine Messvorrichtung gemäß einer ersten, nicht beanspruchten Ausführungsform und
Fig. 2 eine Messvorrichtung gemäß einer zweiten, erfindungsgemäßen Ausführungsform.

### Wege zur Ausführung der Erfindung und gewerbliche Verwertbarkeit:

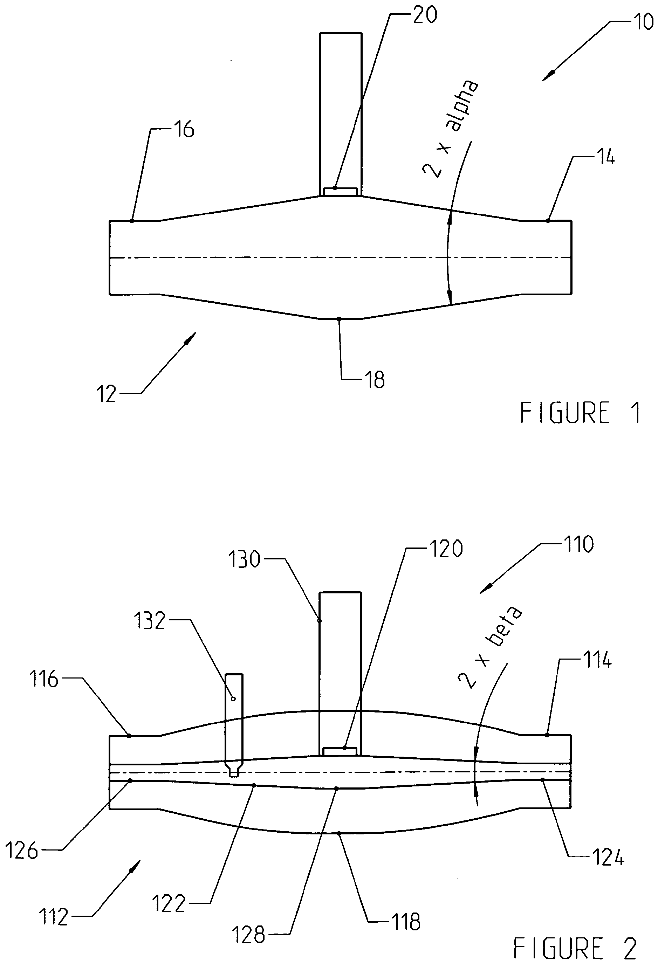

Fig. 1 zeigt eine Messvorrichtung 10, umfassend ein Messrohr 12 zur Messung der Strömungsgeschwindigkeit eines durch das Messrohr 12 durchströmenden Fluids wie etwa Wasser. Das Messrohr 12 umfasst einen Einlass 14, einen Auslass 16 und einen Messabschnitt 18. Ein Sensor 20 ist an der Innenwand des Messrohrs 12 im Bereich des Messabschnitts 18 angeordnet. Bei dem Sensor 20 handelt es sich um einen thermischen Sensor, wie er beispielsweise in einem thermischen Anemometer verwendet wird.

Der Innendurchmesser des Einlasses 14 und des Auslasses 16 ist kleiner als der Innendurchmesser des Messabschnitts 18. Der Innendurchmesser des Messrohrs vom Einlass 14 zum Messabschnitt 18 erweitert sich stetig und verjüngt sich wieder stetig vom Messabschnitt 18 zum Auslass 16. Das Verhältnis der Innendurchmesser von Messabschnitt zu Einlass beträgt etwa 1,5 bis 6.

Ein Fluid mit einer gegebenen Strömungsgeschwindigkeit fließt durch den Einlass 14. Aufgrund des erweiterten Innendurchmessers des Messrohrs 12 im Bereich des Messabschnitts 18 ist die Strömungsgeschwindigkeit an der Messstelle, an der sich der Sensor 20 befindet, um das Durchmesserverhältnis zum Quadrat zwischen Messabschnitt 18 und Einlass 14 reduziert. Der Sensor 20 erfasst somit eine geringere Strömungsgeschwindigkeit, als die, die an dem Einlass 14 des Messrohrs 12 vorhanden ist.

Da ein thermisches Anemometer Strömungen eines Fluids mit einer geringen Geschwindigkeit mit einer höheren Genauigkeit erfassen kann als Strömungen eines Fluids mit einer hohen Geschwindigkeit, erfasst der Sensor die Strömungsgeschwindigkeit des Fluids im Messabschnitt mit einer höheren Genauigkeit, als wenn er die Strömungsgeschwindigkeit des Fluids am Einlass 14 erfassen würde.

Mit Hilfe des bekannten Innendurchmesserverhältnisses zwischen Messabschnitt 18 und Einlass 14 lässt sich auf Basis der vom Sensor 20 ermittelten Strömungsgeschwindigkeit der an dem Einlass 14 vorliegende Wert des Durchflusses des Fluids exakt angegeben.

Fig. 2 zeigt eine Messvorrichtung 110 gemäß einer weiteren Ausführungsform. Die Messvorrichtung 110 umfasst ein Messrohr 112, einen Sensor 120, wie er etwa in einem thermischen Anemometer verwendet wird, zur Messung der Strömungsgeschwindigkeit des durch das Messrohr 112 hindurchströmenden Fluids wie etwa Wasser. Das Messrohr 112 weist einen Einlass 114, einen Auslass 116 und einen Messabschnitt 118 auf, wobei der Innendurchmesser des Messabschnitts 118 größer als der Innendurchmesser des Einlasses 114 ist. Der Innendurchmesser des Messrohrs 112 erweitert sich vom Einlass 114 zum Messabschnitt 118 stetig und verjüngt sich vom Messabschnitt 118 zum Auslass 116 stetig. In dem Messrohr 112 ist ein Innenrohr 122 angeordnet, das einen Innenrohreinlass 124, einen Innenrohrauslass 126 und einen Innenrohrmessabschnitt 128 aufweist. Der Innenrohrmessabschnitt 128 weist einen größeren Innendurchmesser auf als der Innenrohreinlass 124. Das Innenrohr 122 ist in Figur 2 im Wesentlichen zentrisch in dem Messrohr 112 angeordnet gezeigt. Es sind jedoch auch nicht zentrische Positionierungen möglich.

Der Innendurchmesser des Innenrohrs erweitert sich vom Innenrohreinlass 124 zum Innenrohrmessabschnitt 128 stetig und verjüngt sich vom Innenrohrmessabschnitt 128 zum Innenrohrauslass 126 stetig. Das Durchmesserverhältnis des Innenrohrmessabschnitts 128 zu Innenrohreinlass 124 liegt in einem Bereich von etwa 1,5 bis 6. Der Sensor 120 ist im Bereich des Messabschnitts 118 an der Innenwand des Innenrohrs 122 angeordnet. Zum Schutz vor dem entlang der Außenwand des Innenrohrs 122 strömenden Fluids ist der Sensor 120 in einer Tauchhülse 130 angeordnet.

Weiterhin ist eine Justagevorrichtung 132 zum Kalibrieren der Messvorrichtung vorgesehen, um mittels der erfassten Strömungsgeschwindigkeit den Durchfluss angeben zu können.

Analog wie im Zusammenhang mit Fig. 1 dargestellt, strömt ein Fluid mit einer gegebenen Strömungsgeschwindigkeit durch den Innenrohreinlass 124. Aufgrund der Erweiterung des Innendurchmessers des Innenrohrs 122 im Bereich des Innenrohrmessabschnitts 128 ist die Strömungsgeschwindigkeit des Fluids im Bereich des Innenrohrmessabschnitts 128 im Vergleich zum Innenrohreinlass 124 reduziert, so dass der Sensor 120 im Innenrohrmessabschnitt 128 eine geringere Strömungsgeschwindigkeit des Fluids erfasst als am Innenrohreinlass 124 vorliegt. Da der Sensor 120 diese geringere Strömungsgeschwindigkeit mit einer hohen Genauigkeit erfassen kann, wird die Strömungsgeschwindigkeit des Fluids mit einer hohen Genauigkeit erfasst. Der von dem Sensor erfasste Wert der Strömungsgeschwindigkeit des Fluids kann so umgerechnet werden, dass der Durchfluss im Messrohr mit hoher Genauigkeit angegeben werden kann.

Die in Figur 2 dargestellte Ausführungsform, bei der die Messung der Strömungsgeschwindigkeit mittels einer Teilstrommessung erfolgt, weist gegenüber der in Figur 1 dargestellten Ausführungsform den Vorteil auf, dass der Steigungswinkel β zwischen Innenrohreinlass 124 und Innenrohrmessabschnitt 128 bei gleicher Einbaulänge der Ausführungsformen geringer als der Steigungswinkel α zwischen Einlass 14 und Messabschnitt 18 ist, so dass sich im Innenrohrmessabschnitt 128 weniger Rückströmungen oder Wirbel ausbilden als in Messabschnitt 18. Die Messgenauigkeit der in Figur 2 dargestellten Ausführungsform ist bei hohen Strömungsgeschwindigkeiten eines Fluids im Vergleich zu der in Figur 1 dargestellten Ausführungsform weiter verbessert.

## Patentansprüche

1. Messvorrichtung umfassend ein Messrohr (12;112, 122) und einen thermischen Sensor (20; 120) zur Messung des Durchflusses eines durch das Messrohr (12;112) hindurchströmenden Fluids, wobei das Messrohr (12; 112, 122) einen Einlass (14; 114, 124) und einen Auslass (16;116, 126) aufweist sowie einen Messabschnitt (18; 118, 128), in dem der Sensor (20; 120) angeordnet ist, wobei der Einlass (14;114, 124) einen Einlassinnendurchmesser und der Messabschnitt (18; 118, 128) einen Messabschnittsinnendurchmesser aufweisen und der Messabschnittsinnendurchmesser größer als der Einlassinnendurchmesser ist, **dadurch gekennzeichnet, dass** in dem Messrohr (112) ein Innenrohr (122) angeordnet ist, das einen Innenrohreinlass (124), einen Innenrohrauslass (126) und einen Innenrohrmessabschnitt (128) aufweist, wobei der Innenrohrmessabschnitt (128) einen Innendurchmesser aufweist, der größer ist als der Innendurchmesser des Innenrohreinlasses (124), und der Sensor (120) am Innenrohr (122) angeordnet ist, dass sich der Innendurchmesser des Innenrohrs (122) vom Innenrohreinlass (124) zum Innenrohrmessabschnitt (128) stetig erweitert und vom Innenrohrmessabschnitt (128) zum Innenrohrauslass (126) stetig verjüngt und dass der Sensor (120) im Bereich des Messabschnitts (118) an der Innenwand des Innenrohrs (122) angeordnet ist.

2. Messvorrichtung nach Anspruch 1, **dadurch gekennzeichnet, dass** das Innenrohr (122) im Wesentlichen zentrisch in dem Messrohr (112) angeordnet ist.

3. Messvorrichtung nach einem der Ansprüche 1 oder 2, **dadurch gekennzeichnet, dass** der Winkel β, unter dem sich das Innenrohr (122) bezüglich der Achse des Innenmessrohrs vom Innenrohreinlass (124) zum Innenrohrmessabschnitt (128) stetig erweitert und vom Innenrohrmessabschnitt (128) zum Innenrohrauslass (126) stetig verjüngt, möglichst klein, vorzugsweise kleiner 30°, ist.

4. Messvorrichtung nach einem der Ansprüche 1 bis 3, **dadurch gekennzeichnet, dass** das Innendurchmesserverhältnis Innenrohrmessabschnitt (128) zu Innenrohreinlass (124) in einem Bereich von etwa 1,5 bis 6 liegt.

5. Messvorrichtung nach einem der Ansprüche 1 bis 4, **dadurch gekennzeichnet, dass** das Innendurchmesserverhältnis Messrohreinlass (114) zu Innenrohreinlass (124) in einem Bereich von etwa 2 bis 5 liegt.

6. Messvorrichtung nach einem der vorhergehenden Ansprüche, **dadurch gekennzeichnet, dass** der Sensor (12; 120) zur Messung der Strömungsgeschwindigkeit ein Sensor für ein thermisches Anemometer ist.

7. Messvorrichtung nach einem der vorhergehenden Ansprüche, **dadurch gekennzeichnet, dass** eine Justagevorrichtung (132) zum Kalibrieren der Messvorrichtung vorhanden ist.

8. Messvorrichtung nach einem der vorhergehenden Ansprüche, **dadurch gekennzeichnet, dass** das Messrohr (12; 112) und/oder das Innenrohr (12) einen rechteckig oder elliptischen Querschnitt aufweisen/aufweist.

## Claims

1. A measurement apparatus comprising a measuring tube (12; 112, 122) and a thermal sensor (20; 120) for measuring the flow rate of a fluid flowing through the measuring tube (12; 112), wherein the measuring tube (12; 112, 122) has an inlet (14; 114, 124) and an outlet (16; 116, 126) as well as a measuring section (18; 118, 128) in which the sensor (20; 120) is arranged, wherein the inlet (14; 114, 124) has an inlet inside diameter and the measurement section (18; 112, 122) has a measurement section inside diameter, the measuring section inside diameter being greater than the inlet inside diameter,
**characterized in that**
an inner tube (122) is arranged in the measuring tube (112), the inner tube (122) having an inner tube inlet (124), an inner tube outlet (126) and an inner tube measurement section (128), wherein the inner tube measurement section (128) has an inside diameter being greater than the inside diameter of the inner tube inlet (124), and the sensor (120) is arranged at the inner tube (122),
**in that** the inside diameter of the inner tube (122) increases steadily from the inner tube inlet (124) to the inner tube measurement section (128) and tapers steadily from the inner tube measurement section (128) towards the inner tube outlet (126), and **in that** the sensor (120) is arranged at the inner wall of the inner tube (122) in the region of the measuring section (118).

2. The measurement apparatus according to claim 1, **characterized in that** the inner tube (122) is arranged essentially centered in the measuring tube (112).

3. The measurement apparatus according to one of claims 1 or 2, **characterized in that** the angle β, relative to the axis of the inner measuring tube, at which the inner tube (122) increases steadily from the inner tube inlet (124) to the inner tube measurement section (128) and tapers steadily from the inner tube measurement section (128) to the inner tube outlet (126) is as small as possible, preferably less than 30°.

4. The measurement apparatus according to any of claims 1 to 3, **characterized in that** the inside diameter ratio of the inner tube measurement section (128) to the inner tube inlet (124) is in a range from about 1.5 to 6.

5. The measurement apparatus according to one of claims 1 to 4, **characterized in that** the inside diameter ratio of the measuring tube inlet (114) to inner tube inlet (124) is in a range from about 2 to 5.

6. The measurement apparatus according to one of the preceding claims, **characterized in that** the sensor (12; 120) for measuring the flow velocity is a sensor for a thermal anemometer.

7. The measurement apparatus according to one of the preceding claims, **characterized in that** an adjusting device (132) for calibrating the measuring device is provided.

8. The measurement apparatus according to one of the preceding claims, **characterized in that** the measuring tube (12; 112) and/or the inner tube (12) have/have a rectangular or elliptical cross-section.

## Revendications

1. Dispositif de mesure comprenant un tube de mesure (12; 112, 122) et un capteur thermique (20 ; 120) pour mesurer le débit d'un fluide s'écoulant à travers le tube de mesure (12 ; 112), le tube de mesure (12 ; 112, 122) présentant une entrée (14 ; 114, 124) et une sortie (16 ; 116, 126) ainsi qu'une section de mesure (18 ; 118, 128) dans laquelle le capteur (20; 120) est disposé, l'entrée (14 ; 114, 124) présentant un diamètre intérieur d'entrée et la section de mesure (18; 112, 122) un diamètre intérieur de section de mesure et le diamètre intérieur de section de mesure étant plus grand que le diamètre intérieur d'entrée, **caractérisé en ce qu'**un tube intérieur (122) est disposé dans le tube de mesure (112) et présente une entrée de tube intérieur (124), une sortie de tube intérieur (126) et une section de mesure de tube intérieur (128), la section de mesure de tube intérieur (128) présentant un diamètre intérieur qui est plus grand que le diamètre intérieur de l'entrée de tube intérieur (124) et le capteur (120) étant disposé sur le tube intérieur (122), que le diamètre intérieur du tube intérieur (122) s'élargit continuellement de l'entrée de tube intérieur (124) vers la section de mesure de tube intérieur (128) et s'amincit continuellement de la section de mesure de tube intérieur (128) vers la sortie de tube intérieur (126) et que le capteur (120) est disposé dans la zone de la section de mesure (118) sur la paroi intérieure du tube intérieur (122).

2. Dispositif de mesure selon la revendication 1, **caractérisé en ce que** le tube intérieur (122) est disposé sensiblement au centre dans le tube de mesure (112).

3. Dispositif de mesure selon l'une des revendications 1 ou 2, **caractérisé en ce que** l'angle β selon lequel le tube intérieur (122) s'élargit continuellement de l'entrée de tube intérieur (124) vers la section de mesure de tube intérieur (128) et s'amincit continuellement de la section de mesure de tube intérieur (128) vers la sortie de tube intérieur (126) par rapport à l'axe du tube de mesure intérieur est aussi petit que possible, de préférence inférieur à 30°.

4. Dispositif de mesure selon l'une des revendications 1 à 3, **caractérisé en ce que** le rapport des diamètres intérieurs de la section de mesure de tube intérieur (128) et de l'entrée de tube intérieur (124) se situe dans une plage d'environ 1,5 à 6.

5. Dispositif de mesure selon l'une des revendications 1 à 4, **caractérisé en ce que** le rapport des diamètres intérieurs de l'entrée de tube de mesure (114) et de l'entrée de tube intérieur (124) se situe dans une plage d'environ 2 à 5.

6. Dispositif de mesure selon l'une des revendications précédentes, **caractérisé en ce que** le capteur (12 ; 120) pour mesurer la vitesse d'écoulement est un capteur pour un anémomètre thermique.

7. Dispositif de mesure selon l'une des revendications précédentes, **caractérisé en ce qu'**un dispositif de réglage (132) pour étalonner le dispositif de mesure est prévu.

8. Dispositif de mesure selon l'une des revendications précédentes, **caractérisé en ce que** le tube de mesure (12 ; 112) et/ou le tube intérieur (12) présente(nt) une section transversale rectangulaire ou elliptique.
